# EUROPEAN PATENT SPECIFICATION

(11) **EP 3 739 688 B1**
(45) Date of publication and mention of the grant of the patent: **12.10.2022**
(21) Application number: 19174654.4
(22) Date of filing: 15.05.2019
(51) Int. Cl.: H01R 4/2433, H01R 13/506, H01R 13/58, H02S 40/36

(54) **ELECTRIC WIRE CONNECTOR**
ELEKTRODRAHTVERBINDER
CONNECTEUR DE CÂBLE ÉLECTRIQUE

(43) Date of publication of application: 18.11.2020
(73) Proprietor: TE Connectivity Nederland B.V., 5222 AR 's-Hertogenbosch (NL); Tyco Electronics Austria GmbH, 1190 Wien (AT)
(72) Inventor: DENDAS, Freddy Jean Philip, 3600A Genk (BE); LEIJNSE, Olaf, 5721 RD Asten (NL); ROSENKRANZ, Frank Heinz, 1200 Vienna (AT)
(74) Representative: Grünecker Patent- und Rechtsanwälte PartG mbB

(56) References cited:
- EP-A1- 3 324 488
- EP-A2- 0 631 344
- US-A1- 2015 053 251
- US-B1- 6 780 044

## Description

The invention relates to an electric wire connector for connecting at least two wires, particularly solar wires. The electric wire connector comprises:
- a connector housing with a housing base and at least one housing cover, the housing base being divided into at least two compartments; and
- at least two contact terminals, each arranged in a different compartment, the at least two contact terminals being connected to one another by an electrically conductive member,
wherein the at least one housing cover comprises at least one wire receiving opening for receiving one of the at least two wires in an insertion direction and wherein the at least one housing cover is linearly movable relative to the housing base from an open position for receiving at least one of the wires to a closed position for terminating the inserted wire.

Electric wire connectors are used for connecting two or more wires. Usually, each wire is terminated in a separate connector, which are subsequently mated with one another. However, having different connectors for each wire may increase the size and complexity of the system. Furthermore, existing electric wire connectors are not suitable for high wire diameters. In particular, in solar systems, the solar wires have a high outer diameter ranging from 5.5 to 7.5 mm including the jacket. This makes the handling of the wires more troublesome. High bending forces are necessary, in order to terminate a wire ending in the electric wire connector.

An insulation displacement connector is described in EP 0 631 344 A2. The insulation displacement connector is a branch connector used, for example, for grounding cables to the chassis of an automobile. EP 0 631 344 A2 discloses the preamble of independent claim 1.

Further electric wire connectors are disclosed in US 6,780,044 B1, EP 3 324 488 A1 and US 2015/0053251 A1.

Therefore, it is an objective of the invention to provide a compact electric wire connector that facilitates the interconnection between two or more wires.

The invention solves the above-mentioned problem by providing an electric wire connector for connecting at least two wires, particularly solar wires, as defined in claim 1. According to the invention, at least the at least one wire receiving opening is filled with a sealing material. Optional embodiments are defined in the dependent claims.

With the inventive electric wire connector, a single connector is provided for connecting the at least two wires to one another. The housing base comprises a compartment for receiving a respective wire. The wires can be terminated to the contact terminals, which are each arranged in a compartment and electrically coupled with one another by the electrically conductive member. Hence, the simple structure and compactness of the inventive electric wire connector further simplifies the whole application system. Less different parts are needed to connect the at least two wires to one another, further increasing the production efficiency of the connection system.

Furthermore, the at least one reception opening is arranged in the housing cover, the housing cover being linearly movable relative to the housing base. Therefore, the whole wire, meaning the part that is inserted through the reception opening into the connector housing and the part of the wire located directly in front of the reception opening outside of the connector housing, can be moved towards the housing base and the contact terminal arranged in the housing base. Consequently, high bending forces can be prevented for terminating the wire.

The invention can be further improved by the following features, which are independent from one another with respect to their respective technical effects and which can be combined arbitrarily.

The at least one wire receiving opening may be adaptable to a wide range of wire sizes. For example, those wire sizes may have a conductor with an effective cross section of between about 2.5 to about 10 mm² and an outer diameter of the wire, i.e. the jacket, may range between about 5.5 to about 7.5 mm.

The at least one wire receiving opening may comprise a circular cross section in a plane perpendicular to the insertion direction. The cross section of the at least one wire receiving opening may be configured for the maximum wire size. Preferably, the cross section can be adapted to the wire size, i.e. if a wire with a small wire size is inserted, the cross section may be reduced to hold the wire securely in the wire receiving opening. This may, for example, be accomplished by providing clamping jaws in the inner surface of the wire receiving opening, which are held radially movable in the wire receiving opening, reducing or increasing the effective cross section of the wire receiving opening.

However, environmental influences such as humidity and/or dirt entering the housing may cause a malfunction of the electric wire connector. Therefore, at least the at least one wire reception opening may be sealed with a sealing material. The sealing material may form a membrane preventing any unwanted particles to enter the housing. The sealing material may be prearranged in the at least one wire reception opening before inserting the wire. By inserting the wire, the wire may penetrate through the sealing material creating an effective cross section in the wire receiving opening that corresponds to the effective cross section of the wire itself. Therefore, a standardized sealed electric wire connector may be applicable for different wire sizes. The membrane may comprise perforations or cuts separating the membrane into plural segments. The perforations or cuts do not fully penetrate the membrane but will allow a separation of the segments when inserting the wire through the sealing material.

The sealing material may preferably, in particular in the closed position, essentially fill the entire space within the connector housing. In the closed position, the sealing material may essentially fill all voids within the housing and prevent humidity or dirt from entering the housing.

The sealing material may preferably be a gel sealing material fulfilling the requirements of an IPX8 standard, meaning that the electric connector is adapted to safely being immersed under water at a certain depth for a certain time. For example, the electric connector may be adapted to be submerged 1 m in water for 24 hours.

The housing cover may be a single part, which covers all compartments and comprises a separate wire reception opening for each wire to be inserted. Thus, all wires may be mounted and are simultaneously terminated onto their corresponding contact terminals when moving the housing cover to the closed position.

However, in a preferable embodiment of the invention, a housing cover may be comprised for each compartment in the housing base. The housing covers may particularly be linearly movable relative to the housing base independently to one another, facilitating the installation process. A user may concentrate on terminating one wire at a time. The housing covers for each compartment may be separated from one another. Preferably, the housing covers may be structured identically, so that the housing covers may be efficiently produced on a mass scale, for example by injection molding.

The at least one housing cover may be movable relative to the housing base in a direction essentially perpendicular to the insertion direction. Preferably, the at least one housing cover may be linearly slidable relative to the housing base in a direction essentially perpendicular to the insertion direction.

The at least two contact terminals may preferably be insulation displacement contacts (in the following, IDC). By utilizing IDCs, inconvenient processing of the wire, e.g. stripping the wire, prior to termination may be averted. The IDC may comprise a slot with cutting edges, adapted to cut through the jacket of the wire and contact the conductor of the wire. The IDC allows for an easy installation process for electrically connecting a cable.

Alternatively, the at least two contact terminals may be insulation piercing contacts. The contacts may comprise spikes, which may penetrate through the wire jacket and contact the conductors.

A biasing spring may be provided, which is adapted to push the wire against the contacts in the closed state and to ensure that the connection force does not deteriorate over a longer period of operation and/or due to stress, such as vibrations. The biasing spring may be arranged in the corresponding housing cover and be adapted to receive and especially retain the wire. By moving the housing cover from the open into the closed position, the biasing spring pushes the wire against the corresponding contact terminal. Thus, the biasing spring may preferably be arranged opposite the corresponding contact terminal in a motion direction of the housing cover relative to the housing base.

However, the biasing spring does not need to be mounted in the housing cover. Alternatively or additionally, the housing base may encase the IDC and be adapted to slide relative to the IDC when being pushed down by the housing cover. The biasing spring may comprise spring tongues adapted to engage complementary-formed notches at least in the closed position to further stabilize the relative position between the IDC and the biasing spring in the closed position.

The biasing spring may reinforce the contact between the wire conductor and the IDC making the connector suitable for high current connections. With increased contact force, it is also possible to arrange the strands of the wire conductor more tightly. This would lead to a sound pressing force of the conductor against opposing side surfaces of the IDC and a thorough contact of each of the strands against each other within the contact slot on the other hand.

The at least two contact terminals may preferably be adaptable to a wide range of cable sizes. For instance, the slot of the IDC may be adaptable to receive different wire sizes, particularly solar wires as specified above. Therefore, a standardized contact terminal may be provided, which can be used for different wire sizes instead of using specific contact terminals for each wire size.

The slot of the IDC may particularly be arranged essentially perpendicular to the insertion direction and parallel to the motion direction of the housing cover relative to the housing base. Meaning that the wire will be linearly inserted into the slot causing a straight incision of the cutting edges into the wire jacket perpendicular to the longitudinal axis of the wire.

In addition to the biasing spring or as an alternative, at least one retention element may be comprised for retaining the wire when inserted into the at least one receiving opening. The retention element may preferably be attached to the housing cover. The retention element may be adapted to cooperate with the jacket of the wire to be inserted to retain the wire within the housing during the installation process. Therefore, falling out of the wire during installation may be prevented.

The retention element may preferably be a retention spring that is usually made of a single piece of cut, preferably stamped sheet metal. The retention spring may comprise an annular opening for receiving the wire formed on a base. Furthermore, spring arms may radially project inwards and may be slightly bent obliquely to the insertion direction to assume an inclination of 10 to 45° to the insertion direction. Due to this inclination, the spring arms define hooks cooperating with the outer circumference of the jacket, which hooks prevent the wire from being drawn out of the housing after insertion of the wire.

The retention element may further function as a guiding feature, guiding the inserted wire through the housing cover towards an end position. The retention element may thus preferably be arranged in the housing cover having an opening coaxially arranged to the at least one reception opening.

The retention element may preferably be arranged between the at least one reception opening and the biasing spring, guiding the wire to the biasing spring. The biasing spring may encompass the wire in an essentially U-shaped manner, so that a crosspiece of the biasing spring pushes the wire towards the IDC in the closed position.

The retention element may further be adapted to absorb any torsional tension exerted on the wire. Therefore, the torsional tension of the wire is not further transferred to the biasing spring and/or contact terminal. For example, the retention element may comprise a slit, in which the wire may be inserted. The slit may comprise a widening, which may preferably be circular shaped. The widening may act as torsion absorption features, which absorb forces due to wire torsion resulting in a stable wire termination.

The retention element may preferably be a loose piece, which can be fixedly mounted in the housing cover. The retention element may comprise locking features, which may be interlocked with complementary locking features in the housing cover. For example, the retention element may comprise notches, which may be pressed into plastic ribs of the housing cover.

In order to physically separate the compartments and consequently the two wires from each other, at least one barrier may be provided.

The at least one barrier may comprise at least two securing ribs arranged opposite to one another, each forming an end wall of the respective compartment in the insertion direction at least in the open position. The securing ribs may be arranged in a space between two ribs of the at least one housing cover. The space may preferably be filled with the sealing material, further securing the position of the at least one housing cover and housing base in the insertion direction. The distance between the securing ribs may further help ensure that creep and/or clearance requirements are met.

The at least one barrier may be formed from the same material as the housing. The at least one barrier and the housing base may be formed as a single monolithic piece, for example by injection molding. This allows for an easy and efficient mass scale production.

However, in order to increase the stability of the at least one barrier and further facilitate the manufacturing process of the connector, the at least one barrier and the housing base may be formed as separate parts. The at least one barrier and the housing base may comprise a clipping mechanism, which engages once the at least one barrier is put in position. The at least one barrier may further be stabilized in the housing base by the sealing material.

The at least one barrier may comprise a channel for receiving the electrically conductive member and allowing passage of the same between the two compartments. Therefore, the conductive member may easily be connected to the contact terminals in each compartment. The channel may be formed between the at least one barrier and the housing base. Thus, the contact terminals and/or the conductive member may be installed in the housing base before mounting the at least one barrier.

The connector housing may comprise an insulating plastic material. In particular, for solar applications, the connector housing may comprise a material with good impact strength, such as polyphenylene ether, in particular a modified polyphenylene ether. So that even when the wire connector is subjected to a great impact force, it will be able to withstand it.

The at least one housing cover, the housing base and the barrier may preferably comprise the same material. The housing base and the at least one housing cover may each be formed as monolithic pieces which are movable attachable to one another. The housing cover and the housing base may comprise a latching mechanism that prevents the at least one housing cover from unintentionally being removed from the housing base and further guiding the housing cover linearly relative to the housing base.

The electrically conductive member may, for example, be a conductive strip, such as a copper strip that is fixedly attached to each contact terminal at either end of the strip. The at least two contact terminals may preferably be welded to the conductive member, particularly hot spot welded.

Alternatively or additionally, the electrically conductive member may comprise an electric securing feature, in particular a passive securing feature. The securing feature may prevent any damage to the whole system.

The securing feature may be a fuse preventing overloading of the electrical circuit. The fuse is protected in the housing and can replace a different fuse in the system. Consequently, the system can be optimized. A further fuse does not have to be inserted in the contact system, requiring more effort in the design and installation of the contact system.

The securing feature may be also be a diode working as a valve ensuring that the current only flows in one direction.

The securing feature may also include both a diode and a fuse.

The inventive electric connector may be used for a solar installation with a first and second solar wire, wherein both solar cables are each received in the inventive electric wire connector.

The solar wires may have the same wire size or have different wire sizes. Each solar wire may be received in a respective compartment and may be inserted along their longitudinal axis in the insertion direction into the at least one housing cover in the open state. In other words, the longitudinal axis of the solar wire may be arranged essentially parallel to the insertion direction. According to a further embodiment, the longitudinal axis of the solar wire in the closed position may be arranged essentially parallel to the longitudinal axis of the solar wire in the open position. In the following, the electric wire connector according to the invention is explained in greater detail with reference to the accompanying drawings, in which exemplary embodiments are shown.

In the figures, the same reference numerals are used for elements, which correspond to one another in terms of their function and/or structure.

According to the description of the various aspects and embodiments, elements shown in the drawings can be omitted if the technical effects of those elements are not needed for a particular application, and *vice versa:* i.e. elements that are not shown or described with reference to the figures but are described above can be added if the technical effect of those particular elements is advantageous in a specific application.

In the figures:
- Fig. 1: shows a schematic side view of an embodiment of an electric wire connector according to the invention;
- Fig. 2: shows a schematic top view of the electric wire connector shown in Fig. 1
- Fig. 3: shows a schematic cut view of the electric wire connector shown in Fig. 1
- Fig. 4: shows a schematic explosion view of a housing cover;
- Fig. 5: shows a schematic explosion view of a housing base;
- Fig. 6: shows a schematic perspective view of a first embodiment of a connection sub-assembly;
- Fig. 7: shows a schematic perspective view of a second embodiment of the connection sub-assembly;
- Fig. 8: shows a schematic perspective view of a third embodiment of the connection sub-assembly;
- Fig. 9: shows a schematic perspective view of a barrier; and
- Fig. 10: shows a schematic perspective view of a retention element.

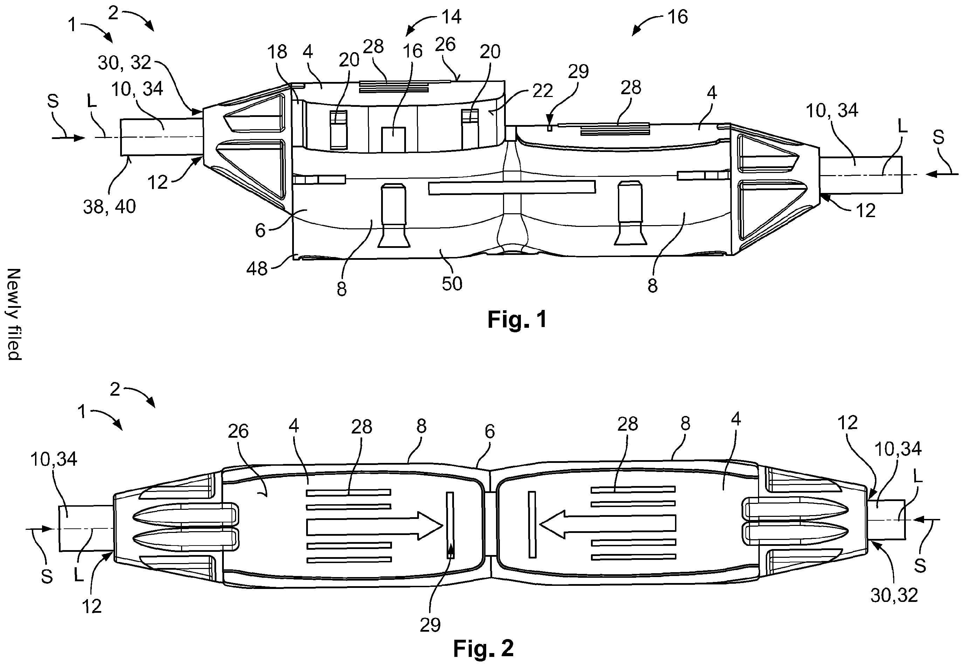

An electric wire connector 1 is explained in further detail with reference to Figs. 1 to 3.

Fig. 1 shows a perspective side view of the electric wire connector 1. The electric wire connector 1 comprises a connector housing 2 with at least one housing cover 4 and a housing base 6. The housing base 6 is divided into at least two compartments 8 and the at least one housing cover 4 is adapted to receive at the least one of at least two wires 10 which are supposed to be connected to one another via the electric wire connector 1.

In this embodiment, the connector housing 2 comprises a separate housing cover 4 for each compartment 8, which are each adapted to receive one of the at least two wires 10. The wires 10 may extend along a longitudinal axis L and can be inserted through a wire receiving opening 12 into the connector housing 2 in an insertion direction S.

The housing cover 4 comprises the wire receiving opening 12 and is held linearly movable relative to the housing base 6 from an open position 14 for receiving wire 10 to a closed position 16. The housing covers 4 as shown in Figs. 1 to 3 may be separated from one another and independently movable relative to the housing base 6. This has the advantage that during installation one can concentrate on terminating one wire 10 after the other. A user does not have to hold both wires 10 in the connector housing 2, while pushing the housing covers 4 into the closed position 16. In Figs. 1 to 3, one housing cover 4 is shown in the closed position 16 and the other housing cover is shown in the open position 14.

The housing covers 4 are formed identically to one another, therefore increasing the production efficiency. The housing cover 4 may comprise a plastic material and preferably be formed by an injection moulding process. As can be seen in Fig. 1, the housing cover 4 may comprise a guiding slot 18 and locking latches 20 formed on an outer surface 22 facing a side surface of the housing base 6. The housing base 6 may comprise complementary formed locking latches 24, which interlock with the locking latches 20 and block further movement of the housing cover 4 relative to the housing base 6. The locking latches 20 and the complementary locking latches 24 may lock the housing cover 4 in the closed position 16 preventing any unintentional dismounting. The housing cover 4 may be adapted for single use only, meaning that once the housing cover 4 is in a closed position 16 it is locked for good, i.e. cannot be opened without exercising excessive force and/or breaking the housing cover 4. This enables a secure connection, even in harsh environments, where the connector 1 may be subject to a lot of stress such as impact or vibrations.

On a top surface 26, the housing cover 4 may comprise a ribbing 28 increasing the grip when handling the connector 1. The housing cover 4 may be moved to the closed position 16 by means of tools, such as pliers. The ribbing 28 may prevent slipping of the tool. Furthermore, the housing cover 4 comprises a marking 29 indicating the point in which the wire 10 is fully inserted. Alternatively, the housing cover 4 may be transparent allowing a direct view on the insertion state of the wire 10. However, the electric wire connector 1 may preferably comprise a high impact resistance and may thus be formed comprising a plastic material with such properties, e.g. polyphenylene ether, particularly a modified polyphenylene ether. These materials are often non-transparent, therefore the marking 29 may prevent any installation errors.

Each housing cover 4 comprises a wire receiving opening 12, which may preferably be formed integrally with the housing cover 4. The wire receiving opening 12 may have a circular shape and be adaptable to various wire sizes. Therefore, a single standardized housing cover 4 may be produced for different wire sizes. For example, the wire receiving opening 12 may have a maximal cross-section adapted for receiving the largest wire size. Smaller wires may thus still be insertable into the wire receiving opening 12. However, various applications usually require sealed connectors 1 preventing particles, such as dust and humidity, from entering the connector housing 2.

For this, at least the wire receiving opening 12 may be filled with a sealing material 30, such as a sealing gel 32. By inserting the wire 10, the sealing material 30 is penetrated leading to the wire receiving opening 12 having an effective cross section adapted to the cross section of the wire 10.

The wires 10 may preferably be solar wires 34 each having a wire conductor 36 and a wire jacket 38. The wire conductor 36 may be formed by individual strands and the jacket 38 may be surrounded by a further insulation 40. Thus, the solar wire 34 may be doubly isolated.

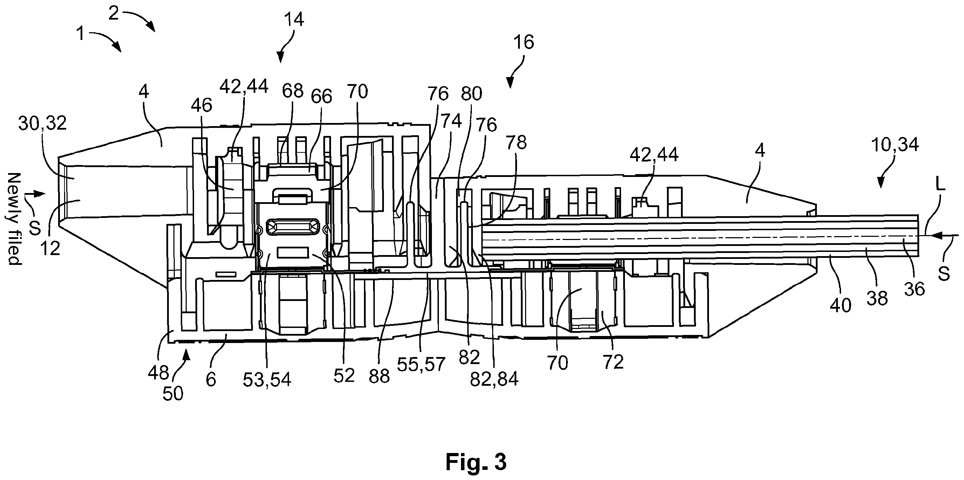

In Fig. 3, a cut side view of the electric wire connector 1 shown in Figs. 1 and 2 is shown. One wire 10, particularly solar wire 34, is installed in one compartment 8, meaning that the wire 10 is inserted into the wire receiving opening 12 of the respective housing cover 4 and the housing cover 4 is moved into the closed position 16. Preferably, the housing cover 4 and the housing base 6 may be filled with the sealing material 30 so that all voids may be filled by the sealing material 30 in the closed position 16 and avoiding that excessive sealing material 30 is pushed out of the connector housing 2, when moving the housing cover 4 from the open position 14 to the closed position 16.

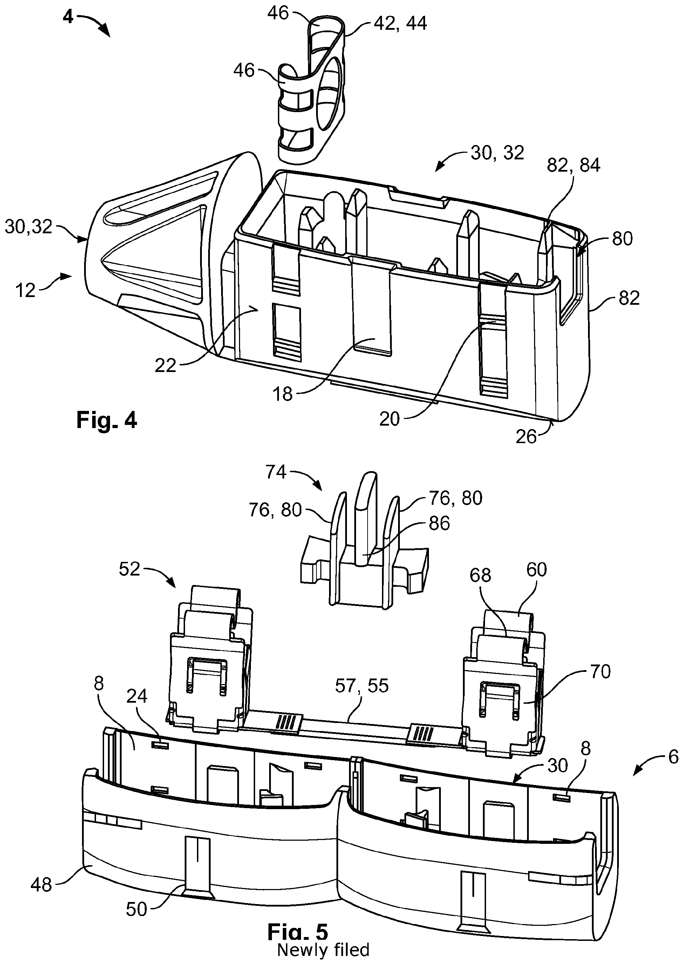

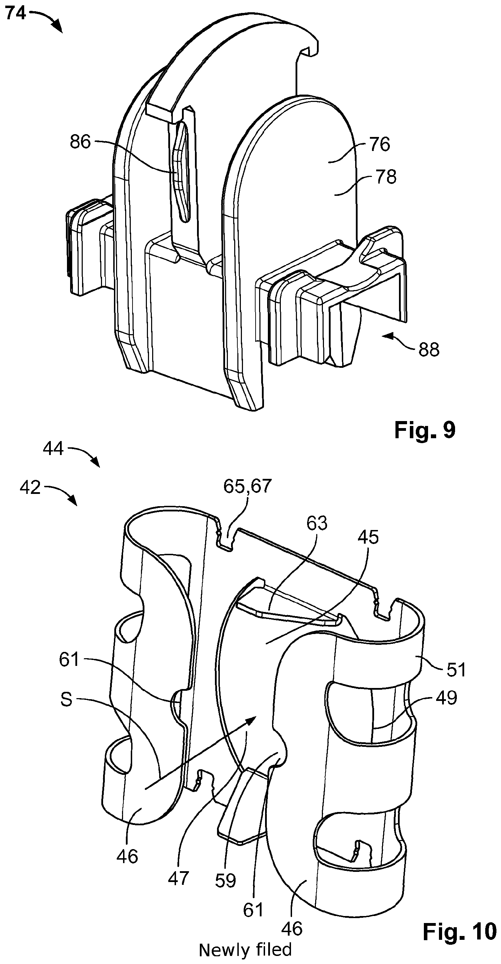

The other housing cover 4 is shown in the open position 14 before insertion of the wire 10. For preventing the wire 10 from slipping out of the connector housing 2 after inserting it through the wire receiving opening 12, a retention element 42 such as a retention spring 44 may be provided. The retention element 42 is explained in further detail with reference to Fig. 4 showing an explosion view of an embodiment of a housing cover and Fig. 10 showing a schematic perspective view of the retention element 42. The retention element 42 may be mounted in the housing cover 4 and comprise a guiding opening 45 arranged coaxially to the wire receiving opening 12. Preferably, the retention element 42 may be a separate part and may be formed by a sheet metal. In this embodiment, the retention element 42 is a retention spring 44 comprising spring arms 46, which project radially inwardly and may be slightly bent obliquely to the insertion direction S to assume an inclination of 10° to 45° to the insertion direction S. Due to this inclination, the spring arms 46 define hooks cooperating with the outer circumference of the jacket 38, which hooks prevent the wire 10 from being drawn out of the housing after insertion of the wire 10. The spring arms 46 are bent towards each other and are distanced from one another by an axial slit 47. The center of the axial slit is preferably flush with the center of the guiding opening, so that the wire 10 can be inserted through the slit 47 into the guiding opening 45. The flexibility of the spring arms 46 may be further increased by providing cutouts 49 at the bending curves 51 of the spring arms.

The retention element 42 may be adapted to further absorb any torsional tension of the wire 10, so that the torsional tension is not further transmitted to the contact terminals. In this embodiment, torsion absorption features 53 are realized by a widening 59 of the axial slit 47 in a direction essentially perpendicular to the insertion direction S. Essentially circumferential recesses 61 of the spring arms 46 bordering the axial slit 47 may form the widening 59. The torsion absorption features 53 may prevent rotation of the inserted part of the wire 10 resulting in a stable wire termination.

To further ensure that the wire 10 is centered for an easy insertion, the retention element 42 may further be provided with at least one guiding flap 63 extending obliquely from the circumference of the guiding opening 45 towards the axial slit 47. Thus, the guiding flap 63 may act as a ramp directing the wire 10 after passing the axial slit 47 to the guiding opening 45. Preferably, at least two guiding flaps 63 may be provided, the at least two guiding flaps 63 being arranged diametrically to one another.

The retention element 42 may preferably be a loose part, which can be fixedly mounted in the housing cover 4. For securely mounting the retention element 42, the retention element may be provided with locking features 65, such as locking notches 67, which may be pressed into a plastic rib of the housing cover 4. The retention element 42 may be further secured by the sealing material 30.

Fig. 5 shows an explosion view of an embodiment of a housing base 6. The housing base 6 comprises an essentially U-shaped body 48, when looking at it in the insertion direction S.

The body 48 may preferably be formed as a monolithic piece 50 forming two compartments 8. The compartments 8 are preferably symmetrical to one another further facilitating the production process. The body 48 may be formed by an injection molding process and may preferably comprise a material with high impact strength.

A contact sub-assembly 52 may be mounted in the housing base 6. The contact sub-assembly 52 is comprised of two contact terminals 53 each adapted to be received in their respective compartments 8 and an electrically conductive member 57, in this case a Cu-strip 55, electrically connecting the two contact terminals 53 to one another. The contact terminals 53 may be welded onto the conductive member 57 ensuring a stable and secure connection between the two terminals 53.

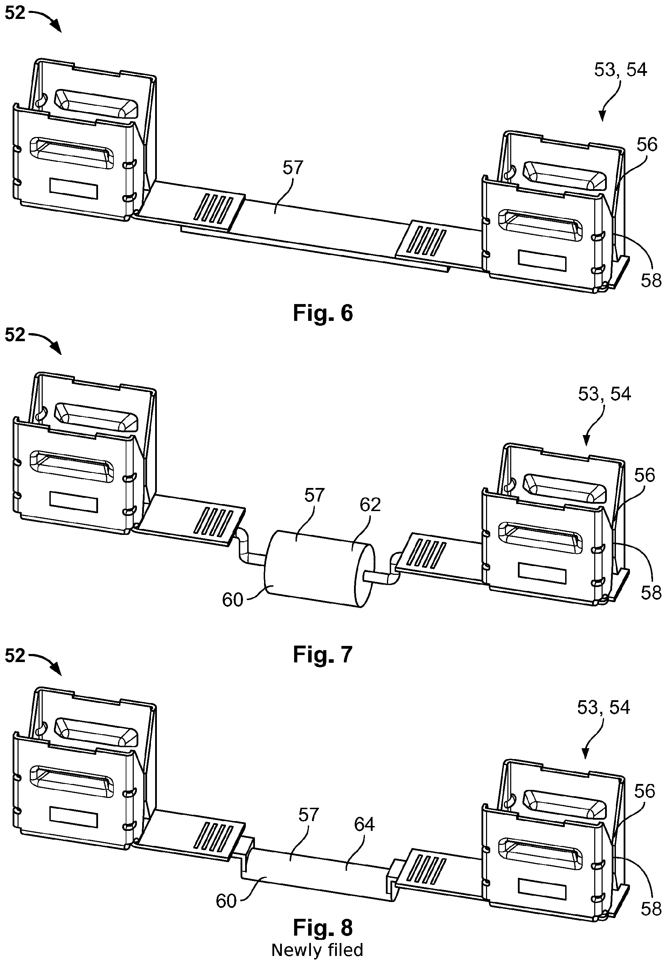

Different embodiments of the contact sub-assembly 52 are shown in Figs. 6 to 8.

The contact terminals 53 may preferably be insulation displacement contacts (IDCs) 54 comprising a slot 56 bordered by cutting edges 58. The slot 56 may preferably be adaptable to the wire size inserted into the slot 56. The cutting edges 58 are adapted to cut through the wire jacket 38 and contact the wire conductor 36. The IDCs 54 may each be mounted in their respective compartments 8 and be connected to one another by the conductive Cu-strip 55 as depicted in Figs. 5 and 6.

However, the conductive member 57 may further comprise at least one securing feature 60. The securing feature 60 may be a diode 62 or a fuse 64 as shown in Figs. 7 and 8, respectively. The securing feature 60 may thus replace a securing feature placed in a different place in the application system. Hence, by introducing the securing feature 60 into the electrical wire connector 1, the application system's components may be further decreased, as well as the number of interconnects. This would lead to a higher reliability and increased user experience.

Furthermore, a biasing spring 66 may be provided. The biasing spring 66 may encompass the IDC 54 and be slidably movable relative to the IDC 54. The movement of the biasing spring 66 may be actuated by movement of the housing cover 4. Thus, the housing cover 4 may push the biasing spring 66 towards the IDC 54 in the closed position.

The biasing spring 66 may have an essentially U-shape and be arranged in the housing cover 4 in the open position 14 as seen in Fig. 3. Thus, when inserting the wire 10 into the housing cover 4, the wire 10 is eventually encompassed by the biasing spring 66. The biasing spring 66 may be attached to the housing cover by adhesive and/or form-fit means. When pushing the housing cover 4 into the closed position 16, the biasing spring is moved synchronously with the housing cover 4. Thus, a crossbeam 68 of the biasing spring 66 presses the wire 10 in the motion direction and at least in the closed position 16 pushes the wire 10 into the slot 56 and holds it in the slot 56 with a biasing force. The biasing spring 66 may comprise arms 70 connected by the crossbeam 68, which slide past the IDC 54 and may be received in a receiving chamber 72 formed in the body 48 of the housing base 6.

Furthermore, as can be seen in Fig. 5, a barrier 74 may be provided, physically separating the two compartments 8. The barrier 74 and the housing base 6 may preferably be separate parts, which barrier 74 may be fixedly attached in the housing base 6 after mounting of the contact sub-assembly 52.

Fig. 9 elucidates an embodiment of the barrier 74. The barrier 74 may comprise a pair of securing ribs 76 arranged opposite to one another, each forming an end wall 78 of the respective compartment 8 in the insertion direction S at least in the open position 14. In the closed position 16, the securing ribs 76 may be arranged to extend into a slot 80 formed between to ribs 82 of the housing cover 4. The ribs 82 may be distanced from one another in the insertion direction S, wherein rib 82 that is arranged closer to the respective wire receiving opening 12 in the insertion direction S may form a stop point 84 until which the wire 10 may be inserted into the connector housing 2. The slot 80 may preferable be filled with the sealing material, further securing the position of the at least one housing cover 4 and housing base 6 in the insertion direction S and stabilizing the ribs 82. This allows for a greater distance between the ribs 82 of each compartment and may thus further help ensuring that creep and/or clearance requirements are met.

The barrier 74 may be formed from the same material as the housing base 6. To securely mount the barrier 74, the barrier 74 and the housing base 6 are provided with a clicking mechanism 86. In order to allow an easy passage of the conductive member 57 between both compartments 8, a channel 88 may be provided. The channel 88 may be formed between the barrier 74 and the housing base 6 and encompass the conductive member 57. To further stabilize the mounted barrier 74, sealing material 30 may be provided by filling the channel 88 and the compartments 8.

### REFERENCE NUMERALS

- 1: electric wire connector
- 2: connector housing
- 4: housing cover
- 6: housing base
- 8: compartment
- 10: wire
- 12: wire receiving opening
- 14: open position
- 16: closed position
- 18: guiding slots
- 20: locking latches
- 22: outer surface
- 24: complementary locking latches
- 26: top surface
- 28: ribbing
- 29: marking
- 30: sealing material
- 32: sealing gel
- 34: solar wires
- 36: wire conductor
- 38: wire jacket
- 40: insulation
- 42: retention element
- 44: retention spring
- 45: guiding opening
- 46: spring arms
- 47: axial slit
- 48: U-shaped body
- 49: cutout
- 50: monolithic piece
- 51: bending curve
- 52: contact sub-assembly
- 53: torsion absorption feature
- 53: contact terminals
- 54: insulation displacement contacts
- 55: Copper strip
- 56: slot
- 57: conductive member
- 58: cutting edge
- 59: widening
- 60: securing feature
- 61: recess
- 62: diode
- 63: guiding flap
- 64: fuse
- 65: locking features
- 66: biasing spring
- 67: locking notches
- 68: crossbeam
- 70: arms
- 72: receiving chamber
- 74: barrier
- 76: securing ribs
- 78: end wall
- 80: space
- 82: rib
- 84: stop point
- 86: clicking mechanism
- 88: channel
- L: longitudinal axis
- S: insertion direction

## Claims

1. Electric wire connector (1) for connecting at least two wires (10), the electric wire connector (1) comprising:
a connector housing (2) with a housing base (6) and at least one housing cover (4), the housing base (6) being divided into at least two compartments (8); and
at least two contact terminals (53), each arranged in a different compartment (8), the at least two contact terminals (53) being connected to one another by an electrically conductive member (57),
wherein the at least one housing cover (4) comprises at least one wire receiving opening (12) for receiving one of the at least two wires (10) in an insertion direction (S)
and wherein the at least one housing cover (4) is linearly movable relative to the housing base (6) from an open position (14) for receiving at least one of the wires (10) to a closed position (16) for terminating the inserted wire (10), **characterized in that** at least the at least one wire receiving opening (12) is filled with a sealing material (30).

2. Electric wire connector (1) according to claim 1 , wherein a separate housing cover (4) may be comprised for each compartment (8).

3. Electric wire connector (1) according to claim 2, wherein each housing cover (4) is movable independently from one another.

4. Electric wire connector (1) according to any one of claims 1 to 3, wherein the at least one housing cover (4) is movable relative to the housing base (6) in a direction essentially perpendicular to the insertion direction (S).

5. Electric wire connector (1) according to any one of claims 1 to 4, wherein at least one retention element (42) is mounted in the housing cover (4).

6. Electric wire connector (1) according to any one of claims 1 to 5, wherein at least one biasing spring for pushing the wire (10) against the contact terminal (53) is provided.

7. Electric wire connector (1) according to claims 5 and 6, wherein the at least one retention element (42) is arranged between the at least one biasing spring (66) and the at least one wire receiving opening (12).

8. Electric wire connector (1) according to any one of claims 1 to 7, wherein the at least two contact terminals (53) are formed by at least one insulation displacement contact (54) with cutting edges (58) that terminate into a slot (56) for receiving the wire (10).

9. Electric wire connector (1) according to any one of claims 1 to 8, wherein at least one barrier (74) is provided to separate the at least two compartments (8) from one another.

10. Electric wire connector (1) according to claim 9, wherein the at least one barrier (74) and the housing base (6) and/or at least one housing cover (4) are separate parts.

11. Electric wire connector (1) according any one of claims 9 or 10, wherein at least one channel (88) is formed for receiving the electrically conductive member (57).

12. Electric wire connector (1) according to any one of claims 1 to 11, wherein the at least one conductive member (57) comprises at least one securing feature (60).

13. Electric wire connector (1) according to claim 12, wherein the at least one securing feature is a diode (62) and/or fuse (64).

14. Solar installation with a first and a second solar wire (34), wherein the solar wires (34) are each received in an electric wire connector according to any one of the preceding claims.

## Patentansprüche

1. Stromdraht-Verbinder (1) zum Verbinden wenigstens zweier Drähte (10), wobei der Stromdraht-Verbinder (1) umfasst:
ein Verbinder-Gehäuse (2) mit einem Gehäuse-Unterteil (6) und wenigstens einer Gehäuse-Abdeckung (4), wobei das Gehäuse-Unterteil (6) in wenigstens zwei Kammern (8) unterteilt ist; sowie
wenigstens zwei Kontaktanschlüsse (53), die jeweils in einer Kammer (8) angeordnet sind, wobei die wenigstens zwei Kontaktanschlüsse (53) über ein elektrisch leitendes Element (57) miteinander verbunden sind,
wobei die wenigstens eine Gehäuse-Abdeckung (4) wenigstens eine Draht-Aufnahmeöffnung (12) zum Aufnehmen eines der wenigstens zwei Drähte (10) in einer Einführrichtung (S) umfasst
und die wenigstens eine Gehäuse-Abdeckung (4) relativ zu dem Gehäuse-Unterteil (6) linear von einer offenen Position (14) zum Aufnehmen wenigstens eines der Drähte (10) an eine geschlossene Position (16) zum Abschließen des eingeführten Drahtes (10) bewegt werden kann, **dadurch gekennzeichnet, dass** wenigstens die wenigstens eine Draht-Aufnahmeöffnung (12) mit einem Dichtungsmaterial (30) gefüllt ist.

2. Stromdraht-Verbinder (1) nach Anspruch 1, wobei für jede Kammer (8) eine separate Gehäuse-Abdeckung (4) enthalten sein kann.

3. Stromdraht-Verbinder (1) nach Anspruch 2, wobei alle Gehäuse-Abdeckungen (4) unabhängig voneinander bewegt werden können.

4. Stromdraht-Verbinder (1) nach einem der Ansprüche 1 bis 3, wobei die wenigstens eine Gehäuseabdeckung (4) relativ zu dem Gehäuse-Unterteil (6) in einer Richtung im Wesentlichen senkrecht zu der Einführ-Richtung (S) bewegt werden kann.

5. Stromdraht-Verbinder (1) nach einem der Ansprüche 1 bis 4, wobei in der Gehäuse-Abdeckung (4) wenigstens ein Rückhalteelement (42) angebracht ist.

6. Stromdraht-Verbinder (1) nach einem der Ansprüche 1 bis 5, wobei wenigstens eine Vorspannfeder zum Drücken des Drahtes (10) an den Kontaktanschluss (53) vorhanden ist.

7. Stromdraht-Verbinder (1) nach den Ansprüchen 5 und 6, wobei das wenigstens eine Rückhalteelement (42) zwischen der wenigstens einen Vorspannfeder (66) und der wenigstens einen Draht-Aufnahmeöffnung (12) angeordnet ist.

8. Stromdraht-Verbinder (1) nach einem der Ansprüche 1 bis 7, wobei die wenigstens zwei Kontaktanschlüsse (53) durch wenigstens einen Schneidklemm-Kontakt (54) mit Schneidkanten (58) gebildet werden, die in einem Schlitz (56) zum Aufnehmen des Drahtes (10) enden.

9. Stromdraht-Verbinder (1) nach einem der Ansprüche 1 bis 8, wobei wenigstens eine Trennwand (74) vorhanden ist, die die wenigstens zwei Kammern (8) voneinander trennt.

10. Stromdraht-Verbinder (1) nach Anspruch 9, wobei die wenigstens eine Trennwand (74) und das Gehäuse-Unterteil (6) und/oder wenigstens eine Gehäuse-Abdeckung (4) separate Teile sind.

11. Stromdraht-Verbinder (1) nach einem der Ansprüche 9 oder 10, wobei wenigstens ein Kanal (88) zum Aufnehmen des elektrisch leitenden Elementes (57) ausgebildet ist.

12. Stromdraht-Verbinder (1) nach einem der Ansprüche 1 bis 11, wobei das wenigstens eine leitende Element (57) wenigstens eine Sicherungsstruktur (60) umfasst.

13. Stromdraht-Verbinder (1) nach Anspruch 12, wobei die wenigstens eine Sicherungsstruktur eine Diode (62) und/oder eine Sicherung (64) ist.

14. Solaranlage mit einem ersten und einem zweiten Solar-Draht (34), wobei die Solar-Drähte (34) jeweils in einem Stromdraht-Verbinder nach einem der vorangehenden Ansprüche aufgenommen sind.

## Revendications

1. Connecteur de câble électrique (1) pour connecter au moins deux câbles (10), le connecteur de câble électrique (1) comprenant:
un boîtier de connecteur (2) avec une base de boîtier (6) et au moins un couvercle de boîtier (4), la base de boîtier (6) étant divisée en au moins deux compartiments (8); et
au moins deux bornes de contact (53), chacune disposée dans un compartiment différent (8), lesdites au moins deux bornes de contact (53) étant connectées l'une à l'autre par un élément électriquement conducteur (57),
dans lequel ledit au moins un couvercle de boîtier (4) comprend au moins une ouverture de réception de câble (12) pour recevoir l'un desdits au moins deux câbles (10) dans une direction d'insertion (S)
et dans lequel ledit au moins un couvercle de boîtier (4) est linéairement mobile par rapport à la base de boîtier (6) depuis une position ouverte (14) pour recevoir au moins un des câbles (10) jusqu'à une position fermée (16) pour terminer le câble inséré (10), **caractérisé en ce qu'**au moins ladite au moins une ouverture de réception de câble (12) est remplie d'un matériau d'étanchéité (30).

2. Connecteur de câble électrique (1) selon la revendication 1, dans lequel un couvercle de boîtier séparé (4) peut être compris pour chaque compartiment (8).

3. Connecteur de câble électrique (1) selon la revendication 2, dans lequel chaque couvercle de boîtier (4) est mobile indépendamment l'un de l'autre.

4. Connecteur de câble électrique (1) selon l'une quelconque des revendications 1 à 3, dans lequel ledit au moins un couvercle de boîtier (4) est mobile par rapport à la base du boîtier (6) dans une direction essentiellement perpendiculaire à la direction d'insertion (S).

5. Connecteur de câble électrique (1) selon l'une quelconque des revendications 1 à 4, dans lequel au moins un élément de rétention (42) est monté dans le couvercle de boîtier (4).

6. Connecteur de câble électrique (1) selon l'une quelconque des revendications 1 à 5, dans lequel il est prévu au moins un ressort de sollicitation pour pousser le câble (10) contre la borne de contact (53).

7. Connecteur de câble électrique (1) selon les revendications 5 et 6, dans lequel ledit au moins un élément de rétention (42) est disposé entre ledit au moins un ressort de sollicitation (66) et ledit au moins une ouverture de réception de câble (12).

8. Connecteur électrique (1) selon l'une quelconque des revendications 1 à 7, dans lequel lesdites au moins deux bornes de contact (53) sont formées par au moins un contact autodénudant (54) avec des bords coupants (58) qui se terminent par une fente (56) de réception du câble (10).

9. Connecteur de câble électrique (1) selon l'une quelconque des revendications 1 à 8, dans lequel au moins une barrière (74) est prévue pour séparer lesdits au moins deux compartiments (8) l'un de l'autre.

10. Connecteur de câble électrique (1) selon la revendication 9, dans lequel ladite au moins une barrière (74) et la base du boîtier (6) et/ou au moins un couvercle de boîtier (4) sont des pièces séparées.

11. Connecteur de câble électrique (1) selon l'une quelconque des revendications 9 ou 10, dans lequel au moins un canal (88) est formé pour recevoir l'élément électriquement conducteur (57).

12. Connecteur de câble électrique (1) selon l'une quelconque des revendications 1 à 11, dans lequel ledit au moins un élément conducteur (57) comprend au moins un élément de fixation (60).

13. Connecteur de câble électrique (1) selon la revendication 12, dans lequel ledit au moins un élément de fixation est une diode (62) et/ou un fusible (64).

14. Installation solaire avec un premier câble solaire et un second câble solaire (34), dans laquelle les câbles solaires (34) sont chacun reçus dans un connecteur de câble électrique selon l'une quelconque des revendications précédentes.
